# EUROPÄISCHE PATENTSCHRIFT

(11) **EP 2 369 070 B1**
(45) Veröffentlichungstag und Bekanntmachung des Hinweises auf die Patenterteilung: **17.10.2012**
(21) Anmeldenummer: 10015912.8
(22) Anmeldetag: 21.12.2010
(51) Int. Cl.: E03C 1/084, B29C 45/16

(54) **Strahlregler oder dergleichen sanitäres Auslaufelement sowie Verfahren und Spritzgusswerkzeug zu dessen Herstellung**
Beam controller or similar sanitary outlet element and method and injection moulding tool for producing same
Régulateur de rayon ou élément de sortie sanitaire analogue ainsi que procédé et outil de coulée par injection destinés à sa fabrication

(30) Priorität: 23.03.2010 DE 102010012325
(43) Veröffentlichungstag der Anmeldung: 28.09.2011
(73) Patentinhaber: Neoperl GmbH, 79379 Müllheim (DE)
(72) Erfinder: Grether, Hermann, 79379 Müllheim (DE)
(74) Vertreter: Maucher, Wolfgang

(56) Entgegenhaltungen:
- DE-A1- 10 251 362
- DE-A1- 19 852 411

## Beschreibung

Die Erfindung betrifft einen Strahlregler, Durchflussmengenregler, Rückflußverhinderer oder dergleichen sanitäres Auslaufelement, das zumindest ein Mehrkomponentenspritzgussteil aufweist, welches einen Formkörper aus einem harten oder formbeständigen Kunststoffmaterial hat, an dem ein Bestandteil aus einem demgegenüber weichen oder formelastischen Kunststoffmaterial angespritzt ist.

Die Erfindung betrifft auch ein Verfahren zur Herstellung eines Mehrkomponentenspritzgussteiles für ein sanitäres Auslaufelement, insbesondere der eingangs erwähnten Art, bei dem auf einen aus hartem oder formstabilem Kunststoffmaterial hergestellten Formkörper ein Bestandteil des Mehrkomponentenspritzgussteiles aus demgegenüber weichen oder formelastischen Kunststoffmaterial angespritzt wird.

Die Erfindung beschreibt schließlich auch ein Spritzgusswerkzeug zur Herstellung eines Mehrkomponentenspritzgussteiles für ein sanitäres Auslaufelement, das insbesondere zum Einsatz in dem eingangs erwähnten Herstellungsverfahren bestimmt ist und das mehrere Spritzgusswerkzeugteile aufweist, die zumindest ein Formnest umgrenzen.

Aus der DE 102 51 362 A1 der Patentinhaberin ist bereits ein sanitäres Auslaufelement der eingangs erwähnten Art bekannt, das als Strahlregler ausgestaltet ist. Der vorbekannte Strahlregler weist ein Strahlreglergehäuse auf, das eine umlaufende Dichtung trägt, die zwischen dem Strahlreglergehäuse einerseits und der Auslaufarmatur andererseits abdichtet. Das Strahlreglergehäuse kann dazu ein Gehäuseteil mit angeformter Strahlzerlegeeinrichtung aufweisen, welches die als Lippendichtung ausgebildete umlaufende Dichtung trägt. Dabei kann das die Dichtung tragende zuströmseitige Gehäuseteil auch als Mehrkomponenten-Spritzgussteil hergestellt sein, das im Bereich der umlaufenden Dichtung aus einem flexiblen und/oder elastischen Material besteht.

Aus der DE 198 52 411 A1 ist bereits ein sanitäres Auslaufelement bekannt, das als Strahlregler ausgebildet ist, der an eine sanitäre Auslaufarmatur montiert werden kann. Der vorbekannte Strahlregler weist ein Strahlreglergehäuse auf, das als hülsenförmiger Formkörper ausgebildet ist, an den auslaufseitig ein weiches oder formelastisches Kunststoffmaterial angespritzt ist. Der aus weichem oder formelastischen Kunststoffmaterial bestehende Bestandteil des Strahlreglergehäuses bildet eine weiche und/oder wasserabstoßende Oberfläche, mit der eine Kalkbildung weitgehend vermieden werden soll Durch leichte manuelle Verformungen des oberflächlich angespritzten weichen oder formelastischen Kunststoffmaterials sollen sich anhaftende Verkalkungen leicht ablösen lassen.

Auch ist aus der DE 10 2005 010 550 B4 ein sanitärer Wasserauslauf mit einer Strömungsführung vorbekannt, die abströmseitig eine Loch-, Gitter- oder Lamellenstruktur mit einer Anzahl von Auslauföffnungen hat, welche durch Strömungsführungswände umgrenzt sind. Der vorbekannte Wasserauslauf hat eine kugelschichtförmige Gelenkhülse, die verstellbar oder verschwenkbar in einer komplementär geformten Gelenkpfanne angeordnet ist, wobei die Strömungsführung im Hülseninneren der Gelenkhülse vorgesehen ist.

Diese vorbekannten Auslaufelemente sind, insbesondere wenn sie als Mehrkomponentenspritzgussteil hergestellt und/oder verschwenkbar im Wasserauslauf gehalten werden, nur mit hohem Aufwand herstellbar.

Es besteht daher die Aufgabe, ein sanitäres Auslaufelement der eingangs erwähnten Art sowie ein Verfahren und ein Spritzgusswerkzeug zu dessen Herstellung zu schaffen, mit dem der Herstellungsvorgang wesentlich vereinfacht werden kann.

Die erfindungsgemäße Lösung besteht bei dem sanitären Auslaufelement der eingangs erwähnten Art insbesondere darin, dass an das harte oder formbeständige Kunststoffmaterial als Rastaus- und/oder Rasteinformungen ausgebildete Gegenrastmittel angeformt sind, die über das demgegenüber weiche oder formelastische Kunststoffmaterial vorstehen, die zum Zusammenwirken mit an zumindest einem Spritzgusswerkzeugteil vorgesehenen Rastmitteln bestimmt sind und die vorzugsweise über den Umfang des Mehrkomponentenspritzgussteiles verteilt sind, wobei zumindest eine Paarung von miteinander zusammenwirkenden Rast- und Gegenrastmitteln einer zum Spritzen des Formkörpers bestimmten ersten Spritzposition und wenigstens ein Paar von miteinander zusammenwirkenden Rast- und Gegenrastmitteln einer zweiten Spritzposition zugeordnet sind, in welcher der Formkörper und das wenigstens eine damit verrastete Spritzgusswerkzeugteil unter Bildung eines zum Anspritzen des demgegenüber weichen oder formelastischen Kunststoffmaterials bestimmten Freiraums beabstandet sind.

Die vorliegende Erfindung sieht vor, dass der Grund- oder Formkörper in einem durch Spritzgusswerkzeugteile umgrenzten Formnest hergestellt wird. Dabei sind an einem dieser, zumindest einem Spritzgusswerkzeug zugeordneten Spritzgusswerkzeugteile als Rastaus- und/oder Rasteinformungen ausgestaltete Rastmittel vorgesehen, die zur Herstellung von, als komplementäre Rastein- und/oder Rastausformungen ausgebildeten Gegenrastmitteln am Formkörper bestimmt sind. Durch die an dem zumindest einen Spritzgusswerkzeugteil vorgesehenen Rastmittel, welche die Gegenrastmittel in dem aus hartem oder formstabilen Kunststoffmaterial hergestellten Formkörper einformen, wird der derart hergestellte Formkörper lösbar an dem zumindest einen Spritzgusswerkzeugteil gehalten. Nach der Herstellung des Formkörpers wird zumindest ein anderes Paar von Rastmitteln und Gegenrastmitteln in Eingriff gebracht, um den Formkörper mit wenigstens dem einem Spritzgusswerkzeugteil derart auf Abstand zu bringen, dass in einem nachfolgenden Verfahrensschritt in den zwischen Formkörper und dem wenigstens einen Spritzgusswerkzeugteil gebildeten Freiraum das demgegenüber weiche oder formelastische Kunststoffmaterial angespritzt werden kann. Auf diese Weise kann ein Mehrkomponentenspritzgussteil in wenigen Verfahrensschritten in einem vergleichsweise einfachen Spritzgusswerkzeug hergestellt werden, wobei die lagegerechte Positionierung der zur Herstellung des Mehrkomponentenspritzgussteiles erforderlichen Bestandteile im Spritzgusswerkzeug auf einfache Weise sichergestellt ist. Mit Hilfe des erfindungsgemäßen Verfahrens lässt sich im erfindungsgemäßen Spritzgusswerkzeug das für einen Strahlregler, einen Durchflussmengenregler, einen Rückflußverhinderer oder dergleichen sanitäres Auslaufelement vorgesehenes Mehrkomponentenspritzgussteil auf einfache Weise herstellen. Die vorliegende Erfindung erlaubt es, einen aus einem harten oder formstabilen Kunststoffmaterial hergestellten Formkörper erforderlichenfalls auch nahezu vollständig mit einem demgegenüber weichen oder formelastischen Kunststoffmaterial zu umspritzen, um beispielsweise ein Einkriechen von Wasser zwischen die verschiedenen Schichten des Mehrkomponentenspritzgussteiles zu verhindern. Dabei kann die aus weichem oder formelastischem Material bestehende Komponente präzise und/oder dünnwandig auf den Formkörper aufgebracht werden.

Weiterbildungen gemäß der Erfindung ergeben sich aus der nachfolgenden Beschreibung in Verbindung mit den Zeichnungen. Nachstehend wird die Erfindung anhand eines bevorzugten Ausführungsbeispieles noch näher beschrieben.

Es zeigt:
- Fig. 1: ein für ein sanitäres Auslaufelement bestimmtes Mehrkomponentenspritzgussteil, das sich nach seiner Herstellung noch in einem längsgeschnittenen Spritzgusswerkzeug befindet, wobei das Mehrkomponentenspritgussteil einen aus hartem oder formstabilem Kunststoffmaterial hergestellten Grund- oder Formkörper hat, an den ein Bestandteil aus einem demgegenüber weichen und/oder formelastischen Kunststoffmaterial angespritzt ist,
- Fig. 2: das Mehrkomponentenspritzgussteil aus Figur 1 in einer perspektivischen Darstellung,
- Fig. 3: das zur Herstellung des Grund- oder Formkörpers vorgesehene Spritzgusswerkzeug, dessen Spritzgusswerkzeugteile ein hier noch leeres Formnest umgrenzen,
- Fig. 4: das ebenfalls längsgeschnittene Spritzgusswerkzeug aus Figur 3, wobei in das von den Spritzgusswerkzeugteilen umgrenzte Formnest das für den Grund- oder Formkörper vorgesehene harte oder formstabile Kunststoffmaterial in das Formnest eingespritzt ist,
- Fig. 5: ein zum Anspritzen des weichen oder formelastischen Kunststoffmaterials vorgesehenes Spritzgusswerkzeug, dessen Spritzgusswerkzeugteile ein größeres Formnest umgrenzen, damit in den gebildeten Freiraum zwischen dem in das Formnest eingelegten Formkörper einerseits und den das Formnest umgrenzenden Spritzgusswerkzeugteilen andererseits das weiche oder formelastische Kunststoffmaterial eingespritzt werden kann,
- Fig. 6: einen Detail-Längsschnitt im Bereich des mit einem der Spritzgusswerkzeugteile lösbar verrasteten Formkörpers in dem in Figur 5 dargestellten Teilbereich,
- Fig. 7: das Spritzgusswerkzeug aus Figur 5 in einem Längsschnitt, wobei in das von seinen Spritzgusswerkzeugteilen umgrenzte Formnest bereits das weiche oder formelastische Kunststoffmaterial eingespritzt ist,
- Fig. 8: das Formwerkzeug aus Figur 5 und 7 in einem in Umfangsrichtung versetzt angeordneten Längsschnitt,
- Fig. 9: das noch im Spritzgusswerkzeug befindliche Mehrkomponentenspritzgussteil in einem Querschnitt durch Schnittebene IX-IX aus Figur 8,
- Fig. 10: das teilweise aufgeschnittene und in einer perspektivischen Darstellung gezeigte Mehrkomponentenspritzgussteil aus Figur 2 und 9,
- Fig. 11: einen teilweise längsgeschnittenen Strahlregler, in dessen Strahlreglergehäuse auslaufseitig eine Auslaufscheibe eingesetzt ist, die als ein mit Figur 2 und 10 vergleichbares Mehrkomponentenspritzgussteil ausgebildet ist, und
- Fig. 12: einen ebenfalls längsgeschnittenen und mit Figur 11 vergleichbaren Strahlregler, bei dem die im Strahl- reglergehäuse verschwenkbar gelagerte Auslaufscheibe ebenfalls als Mehrkomponentenspritzgussteil ausgestaltet ist.

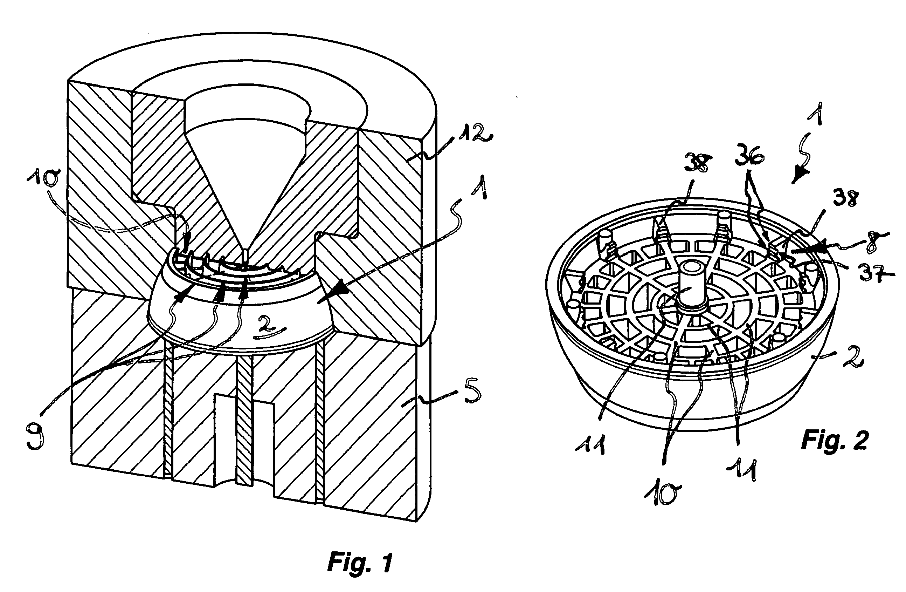

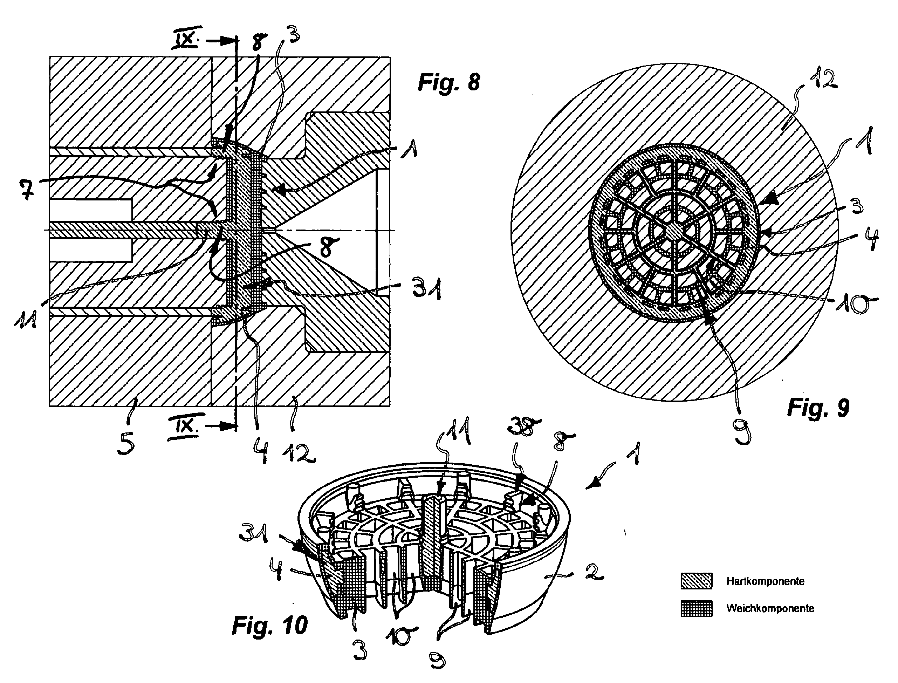

In den Figuren 1 und 3 bis 9 sind einzelne Verfahrensschritte schematisiert gezeigt, die zur Herstellung des in den Figuren 2, 9 und 10 näher dargestellten Mehrkomponentenspritzgussteiles 1 erforderlich sind. Bei dem in den Figuren 2 und 10 näher dargestellten Mehrkomponentenspritzgussteil 1 handelt es sich um eine Schwenkscheibe, die mit ihrer kugelsegmentförmig gewölbten Umfangswandung 2 in eine an der Auslaufstirnseite eines hier nicht weiter dargestellten Strahlreglergehäuses vorgesehene Gelenkpfanne verschwenkbar einsetzbar ist. Während der am Wasserauslauf einer sanitären Auslaufarmatur montierbare Strahlregler einen homogenen und nicht-spritzenden Wasserstrahl formen soll, kann mit Hilfe der an seiner Auslaufstirnseite verschwenkbar angeordneten und den sanitären Wasserauslauf bildenden Schwenkscheibe der austretende Wasserstrahl in seiner Strahlrichtung bei Bedarf ausgerichtet werden.

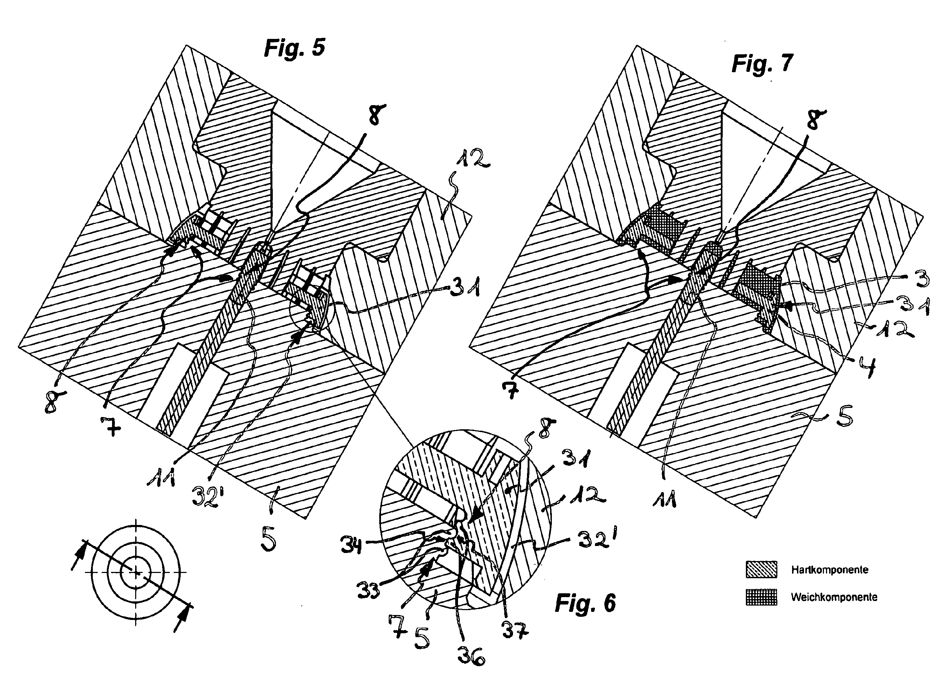

Aus den Figuren 6 bis 10 ist erkennbar, dass die als Mehrkomponentenspritzgussteil 1 ausgestaltete Schwenkscheibe hier aus zwei Materialkomponenten hergestellt ist. Die Oberfläche der Schwenkscheibe wird dadurch durch einen Bestandteil aus weichem oder formelastischem Kunststoffmaterial 3 hergestellt, das an einen aus demgegenüber harten oder formstabilen Kunststoffmaterial 4 hergestellten Formkörper 31 angespritzt wird.

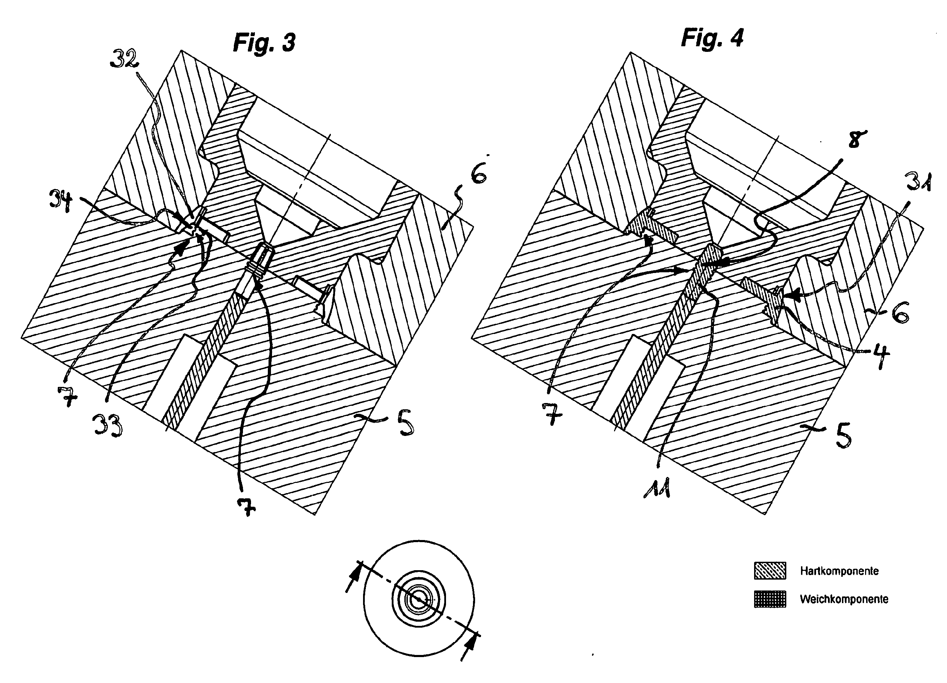

In den Figuren 3 und 4 ist erkennbar, dass das zur Herstellung des aus hartem oder formstabilen Kunststoffmaterial 4 hergestellten Form- oder Grundkörper 31 benötigte Spritzgusswerkzeug zwei Spritzgusswerkzeugteile 5, 6 hat, die ein in Figur 3 noch leeres und in Figur 4 bereits mit Kunststoffmaterial 4 gefülltes Formnest umgrenzen. Aus einem Vergleich der Figuren 3 und 4 wird deutlich, dass an einem der das zur Herstellung des Formkörpers bestimmte Formnest umgrenzenden Spritzgusswerkzeugteile, nämlich am Spritzgusswerkzeugteil 5, als Rastaus- und/oder Rasteinformungen 33, 34 ausgestaltete Rastmittel 7 zur Herstellung von komplementären Gegenrastmitteln 8 am Formkörper vorgesehen sind. Der in den Spritzgusswerkzeugteilen 5, 6 hergestellte Formkörper 31 ist mittels der miteinander zusammenwirkenden Rast- und Gegenrastmittel 7, 8 derart am Spritzgusswerkzeugteil 5 gehalten, dass der dort derart verrastete Formkörper 31 gehandhabt und beispielsweise in ein mit anderen Spritzgusswerkzeugteilen gebildetes weiteres Formnest 32' eingesetzt werden kann.

Aus einem Vergleich der Figuren 5 bis 7 wird erkennbar, dass der hier aus konzentrischen Ringen 9 und radialen Stegen 10 gebildete und mit einem axial vorstehenden stiftförmigen Vorsprung 11 versehene Formkörper 31 mit dem demgegenüber weichen und/oder formelastischen Kunststoffmaterial 3 des weiteren Bestandteils des Mehrkomponentenspritzgussteiles 1 umspritzt wird. Dazu wird nach der Herstellung des Formkörpers 31 zumindest eine andere Paarung von Rastmitteln und Gegenrastmitteln 7, 8 in Eingriff gebracht, um den Formkörper 31 in der in den Figuren 5 und 7 gezeigten zweiten Spritzposition relativ zu dem ihn haltenden Spritzgusswerkzeugteil 5 derart auf Abstand zu bringen, dass nun in einem nachfolgenden Verfahrensschritt in den zwischen Formkörper 31 und dem Spritzgusswerkzeugteil 5 gebildeten Freiraum das demgegenüber weiche und formelastische Kunststoffmaterial 3 eingespritzt wird. Das zum Anspritzen des weichen oder formelastischen Kunststoffmaterials 3 erforderliche Formnest 32' wird dabei durch das Spritzgusswerkzeugteil 5 und ein weiteres Spritzgusswerkzeugteil 12 umgrenzt. Da in der zweiten Spritzposition der an dem Spritzgusswerkzeugteil 5 verrastete Formkörper 31 zum Anspritzen des demgegenüber weichen oder formelastischen Kunststoffmaterials 3 in ein von den Spritzgusswerkzeugteilen 5, 12 gebildetes größeres Formnest 32' eingesetzt wird, ist es in diesem größeren Formnest 32' möglich, das weiche oder formelastische Kunststoffmaterial 3 im wesentlichen über die gesamte Oberfläche des aus dem harten oder formstabilen Kunststoffmaterial 4 hergestellten Formkörpers 31 an diesen anzuspritzen.

In den Figuren 3 bis 5 und 7 bis 8 ist erkennbar, dass auch am stiftförmigen Vorsprung 11 des Formkörpers 31 Gegenrastmittel 8 vorgesehen sind, die mit entsprechenden Rastmitteln 7 am Spritzgusswerkzeugteil 5 in der oben beschriebenen Weise zusammenwirken.

Aus einem Vergleich der Figuren 1 und 3 bis 9 wird deutlich, dass das zumindest eine, zur Herstellung des Mehrkomponentenspritzgussteiles 1 bestimmte Spritzgusswerk mehrere Spritzgusswerkzeugteile 5, 6, 12 hat, die miteinander zumindest ein Formnest 32, 32' umgrenzen. Dabei sind an dem Spritzgusswerkzeugteil 5 die als Rastaus- und/oder Rasteinformungen ausgestalteten Rastmittel 7 vorgesehen, die zur Herstellung der komplementären Gegenrastmittel 8 an dem aus hartem oder formstabilem Kunststoffmaterial 4 hergestellten Form- oder Grundkörper 31 dienen. Das Spritzgusswerkzeugteil 5 kann durch Ineingriffbringen wenigstens einer anderen Paarung von Rast- und Gegenrastmittel 7, 8 in zumindest einer relativ zum Formkörper 31 zweite Spritzposition gebracht werden, in welcher der Formkörper 31 vom Spritzgusswerkzeugteil 5 derart auf Abstand gehalten ist, dass in einem nachfolgenden Verfahrensschritt in den zwischen Formkörper 31 und dem wenigstens einen Spritzgusswerkzeugteil 5 gebildeten Freiraum das demgegenüber weiche oder formelastische Kunststoffmaterial 3 anspritzbar ist.

Aus einem Vergleich der in der ersten Spritzposition verwendeten Spritzgusswerkzeugteile 5, 6 in Figur 3 und 4 einerseits und der in der zweiten Spritzposition befindlichen Spritzgusswerkzeugteile 5, 12 gemäß Figur 1, 5 und 7 andererseits ist erkennbar, dass das Spritzgusswerkzeugteil 5 als Handlingwerkzeug zum Einsetzen des an dem Spritzgusswerkzeugteil 5 verrasteten Formkörpers 31 in ein mit dem anderen Spritzgusswerkzeugteil 12 gebildetes größeres Formnest 32' ausgestaltet ist.

Dabei sieht eine bevorzugte Ausführungsform gemäß der Erfindung vor, dass die Spritzgusswerkzeugteile 5, 6 und 12 Bestandteile eines einzigen Spritzgusswerkzeuges sind, welches vorzugsweise als Wendewerkzeug ausgestaltet ist, bei dem der in der ersten Spritzposition hergestellte Formkörper 31 mittels dem Spritzgusswerkzeugteil 5 zum Anspritzen des aus weichem oder formelastischen Kunststoffmaterial 3 bestehenden weiteren Bestandteils in ein mit dem anderen Spritzgusswerkzeugteil 12 gebildetes weiteres Formnest 32' eingesetzt werden kann.

Das in den Figuren 1, 9 und 10 näher dargestellte Mehrkomponentenspritzgussteil 1 ist als Schwenkscheibe ausgestaltet, welche die Auslaufstirnseite eines Strahlreglers bildet. Das Mehrkomponentenspritzgussteil 1 weist den aus hartem oder formbeständigem Kunststoffmaterial 4 hergestellten Formkörper 31 auf, an den der Bestandteil aus dem demgegenüber weichen oder formelastischen Kunststoffmaterial 3 angespritzt ist. In Figur 2 ist gut zu erkennen, dass an das harte oder formbeständige Kunststoffmaterial 4 die als Rastaus- und/oder Rasteinformungen 36, 37 ausgebildeten Gegenrastmittel 8 angeformt sind, die über das demgegenüber weiche oder formelastische Kunststoffmaterial 3 vorstehen. Diese Gegenrastmittel 8 sind zum Zusammenwirken mit den am Spritzgusswerkzeugteil 5 vorgesehenen Rastmitteln 33 bestimmt und in gleichmäßigen Abständen über den Umfang des Mehrkomponentenspritzgussteiles 1 verteilt. Während zumindest ein Paar der miteinander zusammenwirkenden Rast- und Gegenrastmittel 7, 8 in der ersten Spritzposition zum Spritzen des Formkörpers 31 vorgesehen ist, kann in der zweiten Spritzposition ein anderes Paar von Rast- und Gegenrastmitteln 7, 8 derart in Eingriff gebracht werden, dass der Formkörper 31 und das wenigstens eine damit verrastete Spritzgusswerkzeugteil 5 unter Bildung eines zum Anspritzen des demgegenüber weichen oder formelastischen Kunststoffmaterials 3 bestimmten Freiraums beabstandet ist.

In Figur 2 ist auch erkennbar, dass die in axialer Richtung voneinander beabstandeten Gegenrastmittel 8 an Rastmittelleisten 38 vorgesehen sind. Aus der teilgeschnittenen Perspektivdarstellung in Figur 10 ist erkennbar, dass der Formkörper konzentrische Ringe hat, die über radiale Stege miteinander verbunden sind. Dabei steht ein stiftförmiger Vorsprung 11 über die Zulaufseite des Mehrkomponentenspritzgussteiles 1 vor. Der aus hartem oder formbeständigem Kunststoffmaterial 4 hergestellte Formkörper 31 ist oberflächlich mit dem weichen oder formelastischen Kunststoffmaterial 3 umspritzt, wobei der aus weichem oder formelastischen Kunststoffmaterial 3 bestehende Bestandteil des Mehrkomponentenspritzgussteiles 1 zumindest einen weiteren konzentrischen Ring 9 und/oder wenigstens einen weiteren radialen Steg 10 des Mehrkomponentenspritzgussteiles 1 bildet.

Es ist ein besonderer Vorteil des oben beschriebenen Verfahrens, dass der Formkörper 31 nahezu vollständig mit dem Bestandteil aus dem weichen oder formelastischen Kunststoffmaterial 3 umspritzt werden kann und dass der Formkörper 31 vorzugsweise lediglich im Bereich der der zweiten Spritzposition zugeordneten Gegenrastmittel 8 und/oder im Bereich von hier nicht näher dargestellten Auswerferpunkten unbeschichtet bleibt.

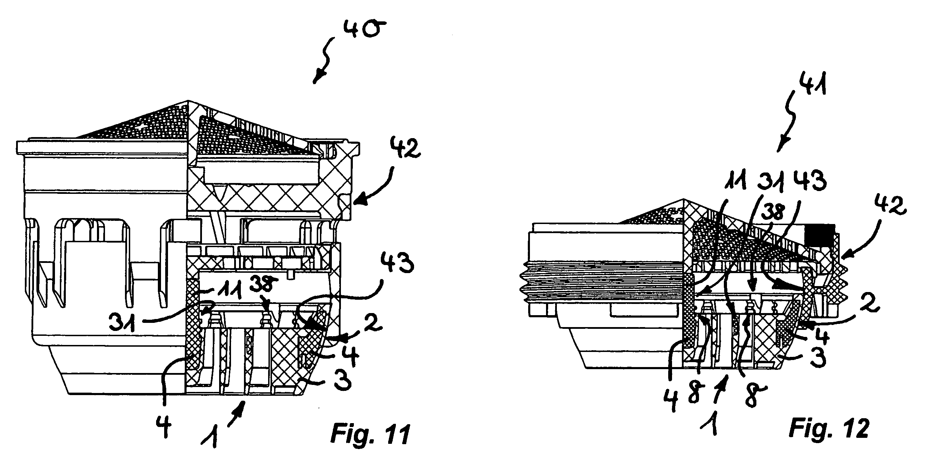

In den Figuren 11 und 12 ist ein Strahlregler in zwei Ausführungsbeispielen 40, 41 dargestellt. Die Strahlregler 40, 41 weisen ein ring- oder hülsenförmiges Strahlreglergehäuse 42 auf, dessen Auslaufstirnseite als eine in das Strahlreglergehäuse einsetzbare und eine Loch-, Gitter- und/oder Netzstruktur tragende Auslaufscheibe ausgestaltet ist. Die Auslaufscheibe, die hier durch das Mehrkomponentenspritzgussteil 1 gebildet wird, ist derart verschwenkbar im Strahlreglergehäuse 42 gelagert, dass durch Verschwenken der durch das Mehrkomponentenspritzgussteil 1 gebildeten Auslaufscheibe die Auslaufrichtung des Wassers verändert und der austretende Wasserstrahl neu ausgerichtet werden kann. Die durch das Mehrkomponentenspritzgussteil 1 gebildete Auslaufscheibe hat dazu zumindest bereichsweise einen kugelsegment- oder kugelschichtförmigen Außenumfang, mit dem die Auslaufscheibe in einem als Gelenkpfanne 43 ausgestalteten Teilbereich des Strahlreglergehäuses 42 verschwenkbar gelagert ist.

Es ist ein besonderer Vorteil, dass der Formkörper 31 des als Auslaufscheibe dienenden Mehrkomponentenspritzgussteiles 1 nahezu vollständig mit dem weichen oder formelastischen Kunststoffmaterial 3 umspritzt werden kann. Da die durch das Mehrkomponentenspritzgussteil 1 gebildete Auslaufscheibe in das Strahlreglergehäuse 42 lediglich eingelegt ist, dichtet das weiche oder formelastische Kunststoffmaterial 3 in der Ringzone zwischen der Auslaufscheibe und dem Gehäuseinnenumfang des Strahlreglergehäuses 42 gut ab. Dies ist insbesondere bei den hier dargestellten Strahlreglern 40, 41 von Vorteil, wo die durch das Mehrkomponentenspritzgussteil 1 gebildete Auslaufscheibe dicht, aber verschwenkbar im Strahlreglergehäuse gelagert sein soll.

## Patentansprüche

1. Verfahren zur Herstellung eines Mehrkomponentenspritzgussteiles (1) für ein sanitäres Auslaufelement, bei dem auf einen aus hartem oder formstabilen Kunststoffmaterial (4) hergestellten Formkörper (31) ein Bestandteil des Mehrkomponentenspritzgussteiles (1) aus demgegenüber weichen oder formelastischen Kunststoffmaterial (3) angespritzt wird, **dadurch gekennzeichnet, dass** an wenigstens einem der das zur Herstellung des Formkörpers (31) bestimmte Formnest (32) umgrenzenden Spritzgusswerkzeugteile (5, 6) als Rastaus- und/oder Rasteinformungen (33, 34) ausgestaltete Rastmittel (7) zur Herstellung von komplementären Gegenrastmitteln (8) am Formkörper (31) vorgesehen sind, und dass nach der Herstellung des Formkörpers (31) zumindest ein anderes Paar oder eine andere Paarung von Rastmitteln (7) und Gegenrastmitteln (8) in Eingriff gebracht wird, um den Formkörper (31) mit wenigstens einem Spritzgusswerkzeugteil (5) derart auf Abstand zu bringen, dass in einem nachfolgenden Verfahrensschritt in den zwischen Formkörper (31) und dem wenigstens einen Spritzgusswerkzeugteil (5) gebildeten Freiraum das demgegenüber weiche oder formelastische Kunststoffmaterial (3) angespritzt wird.

2. Verfahren nach Anspruch 1, **dadurch gekennzeichnet, dass** der an einem Spritzgusswerkzeugteil (5) verrastete Formkörper (31) zum Anspritzen des demgegenüber weichen oder formelastischen Kunststoffmaterials (3) in ein mit wenigstens einem anderen Spritzgusswerkzeugteil (12) gebildetes größeres Formnest (32') eingesetzt wird.

3. Verfahren nach Anspruch 1 oder 2, **dadurch gekennzeichnet, dass** an den Formkörper (31) im wesentlichen über dessen gesamte Oberfläche das demgegenüber weiche oder formelastische Kunststoffmaterial (3) angespritzt wird.

4. Verfahren nach einem der Ansprüche 1 bis 3, **dadurch gekennzeichnet, dass** das Mehrkomponentenspritzgussteil (1) als Auslaufstirnseite eines Rückflußverhinderers, eines Durchflussmengenreglers oder eines Strahlreglers ausgestaltet ist.

5. Spritzgusswerkzeug zur Herstellung eines Mehrkomponentenspritzgussteiles (1) für ein sanitäres Auslaufelement, insbesondere zum Einsatz in einem Herstellungsverfahren gemäß den Ansprüchen 1 bis 4, welches Spritzgusswerkzeug mehrere Spritzgusswerkzeugteile (5, 6; 5, 12) aufweist, die zumindest ein Formnest (32; 32') umgrenzen, **dadurch gekennzeichnet, dass** an zumindest einem Spritzgusswerkzeugteil (5) als Rastaus- und/oder Rasteinformungen (33, 34) ausgestaltete Rastmittel (7) zur Herstellung von komplementären Gegenrastmitteln (8) an einem aus hartem oder formstabilen Kunststoffmaterial (4) hergestellten Formkörper (31) vorgesehen sind, dass mindestens ein Paar von Rast- und Gegenrastmitteln (7, 8) einer ersten Spritzposition des Formkörpers (31) an dem zumindest einen Spritzgusswerkzeugteil zugeordnet ist, und dass das zumindest eine Spritzgusswerkzeugteil (5) durch Ineingriffbringen wenigstens eines anderen Paares oder einer anderen Paarung von Rast- und Gegenrastmitteln (7, 8) in zumindest eine relativ zum Formkörper (31) zweite Spritzposition bringbar ist, in welcher der Formkörper (31) zum Anspritzen eines Bestandteils des Mehrkomponentenspritzgussteiles (1) aus demgegenüber weichen oder formelastischen Kunststoffmaterial (3) von dem zumindest einen Spritzgusswerkzeugteil (5) unter Bildung eines für das demgegenüber weiche oder formelastische Kunststoffmaterial (3) vorgesehenen Freiraums beabstandet ist.

6. Spritzgusswerkzeug nach Anspruch 5, **dadurch gekennzeichnet, dass** das zumindest eine Spritzgusswerkzeugteil (5) als Handlingwerkzeug zum Einsetzen des an dem zumindest einen Spritzgusswerkzeugteil (5) verrasteten Formkörpers (31) in ein mit wenigstens einem anderen Spritzgusswerkzeugteil (12) gebildetes größeres Formnest (32') ausgestaltet ist.

7. Spritzgusswerkzeug nach Anspruch 5 oder 6, **dadurch gekennzeichnet, dass** an einer das Formnest (32) umgrenzenden Umfangswandung des zumindest einen Spritzgusswerkzeugteiles (5) mehrere, in Umfangsrichtung voneinander vorzugsweise gleichmäßig beabstandete Rastmittelleisten mit in axialer Richtung voneinander beabstandeten Rastmitteln (7) vorgesehen sind.

8. Spritzgusswerkzeug nach einem der Ansprüche 5 bis 7, **dadurch gekennzeichnet, dass** das Spritzgusswerkzeug als Dreh- oder Wendewerkzeug ausgestaltet ist.

9. Strahlregler, Durchflussmengenregler, Rückflußverhinderer oder dergleichen sanitäres Auslaufelement, dass zumindest ein, insbesondere im Herstellungsverfahren gemäß einem der Ansprüche 1 bis 4 herstellbares Mehrkomponentenspritzgussteil (1) aufweist, welches einen Formkörper (31) aus einem harten oder formbeständigen Kunststoffmaterial (4) hat, an dem ein Bestandteil aus einem demgegenüber weichen oder formelastischen Kunststoffmaterial (3) angespritzt ist, **dadurch gekennzeichnet, dass** an das harte oder formbeständige Kunststoffmaterial (4) als Rastaus- und/oder Rasteinformungen (36, 37) ausgebildete Gegenrastmittel (8) angeformt sind, die über das demgegenüber weiche oder formelastische Kunststoffmaterial (3) vorstehen und zum Zusammenwirken mit an zumindest einem Spritzgusswerkzeugteil (5) vorgesehenen Rastmitteln (7) bestimmt sind, wobei zumindest ein Paar oder eine Paarung von miteinander zusammenwirkenden Rast- und Gegenrastmitteln (7, 8) einer zum Spritzen des Formkörpers (31) bestimmten ersten Spritzposition und wenigstens ein Paar oder eine Paarung von miteinander zusammenwirkenden Rast- und Gegenrastmitteln einer zweiten Spritzposition zugeordnet sind, in welcher der Formkörper (31) und das wenigstens eine damit verrastete Spritzgusswerkzeugteil (5) unter Bildung eines zum Anspritzen des demgegenüber weichen oder formelastischen Kunststoffmaterials (3) bestimmten Freiraums beabstandet sind.

10. Auslaufelement nach Anspruch 9, **dadurch gekennzeichnet, dass** die in axialer Richtung voneinander beabstandeten Gegenrastmittel (8) an wenigstens einer Rastmittelleiste (38) vorgesehen sind.

11. Auslaufelement nach Anspruch 9 oder 10, **dadurch gekennzeichnet, dass** das Mehrkomponentenspritzgussteil (1) als eine am Gehäuse des Auslaufelementes auslaufseitig angeordnete Auslaufscheibe ausgebildet ist.

12. Auslaufelement nach einem der Ansprüche 9 bis 11, **dadurch gekennzeichnet, dass** der Formkörper (31) nahezu vollständig mit dem Bestandteil aus einem demgegenüber weichen oder formelastischen Kunststoffmaterial (3) umspritzt ist, und dass der Formkörper (31) vorzugsweise lediglich im Bereich der der zweiten Spritzposition zugeordneten Gegenrastmittel (8) und/oder im Bereich von Auswerferpunkten unbeschichtet bleibt.

## Claims

1. Method for producing a multi-component injection moulding (1) for a sanitary outflow element, wherein a component of the multi-component injection moulding (1) made of a plastics material (3) which is comparatively soft or shape-elastic is moulded onto a moulded body (31) made of hard or dimensionally stable plastics material (4), **characterised in that** latching means (7) embodied as latching projections and/or latching indentations (33, 34) for producing complementary mating latching means (8) on the moulded body (31) are provided on at least one of the injection moulding tool parts (5, 6) that delimit the mould cavity (32) intended for the production of the moulded body (31), and **in that** after the production of the moulded body (31) at least another pair or another pairing of latching means (7) and mating latching means (8) are brought into engagement in order to bring the moulded body (31) into a spacing from at least one injection moulding tool part (5) such that in a subsequent process step the comparatively soft or shape-elastic plastics material (3) is injection-moulded into the space formed between the moulded body (31) and the at least one injection moulding tool part (5).

2. Method according to claim 1, **characterised in that** the moulded body (31) latched to an injection moulding tool part (5) is used for injecting the comparatively soft or shape-elastic plastics material (3) into a larger mould cavity (32') which is formed with at least one other injection moulding tool part (12).

3. Method according to claim 1 or 2, **characterised in that** the comparatively soft or shape-elastic plastics material (3) is injected onto the moulded body (31) over substantially the entire surface thereof.

4. Method according to one of claims 1 to 3, **characterised in that** the multi-component injection moulding (1) is embodied as the outflow end face of a backflow preventer, a throughflow regulator or a jet regulator.

5. Injection moulding tool for the production of a multi-component injection moulding (1) for a sanitary outflow element, particularly for use in a manufacturing method according to claims 1 to 4, said injection moulding tool comprising a plurality of injection-moulding tool parts (5, 6; 5, 12) which delimit at least one mould cavity (32; 32'), **characterised in that** latching means (7) embodied as latching projections and/or latching indentations (33, 34) are provided on at least one injection moulding tool part (5) for producing complementary mating latching means (8) on a moulded body (31) produced from hard or dimensionally stable plastics material (4), **in that** at least a pair of latching and mating latching means (7, 8) is associated with a first injecting position of the moulded body (31) on the at least one injection moulding tool part, and **in that**, by the engagement of at least one other pair or another pairing of latching and mating latching means (7, 8), the at least one injection moulding tool part (5) can be brought into at least a second injection position relative to the moulded body (31) in which the moulded body (31) for injection moulding a component of the multi-component injection moulding (1) consisting of comparatively soft or shape-elastic plastics material (3) is at a spacing from the at least one injection moulding tool part (5), forming a space intended for the comparatively soft or shape-elastic plastic material (3).

6. Injection moulding tool according to claim 5, **characterised in that** the at least one injection moulding tool part (5) is embodied as a handling tool for inserting the moulded body (31) latched to the at least one injection moulding tool part (5) into a larger mould cavity (32') formed with at least one other injection moulding tool part (12).

7. Injection moulding tool according to claim 5 or 6, **characterised in that** a plurality of latching strips that are preferably uniformly spaced from one another in the circumferential direction, having axially spaced latching means (7), are provided on a circumferential wall of the at least one injection moulding tool part (5) that delimits the mould cavity (32).

8. Injection moulding tool according to one of claims 5 to 7, **characterised in that** the injection moulding tool is embodied as a rotating or turning tool.

9. Jet regulator, throughflow regulator, backflow preventer or similar sanitary outflow element which comprises at least one multi-component injection moulding (1) which can be produced in particular by the manufacturing process according to one of claims 1 to 4 and which has a moulded body (31) of a hard or dimensionally stable plastics material (4) onto which is injection-moulded a component made of a comparatively soft or shape-elastic plastic material (3), **characterised in that** mating latching means (8) embodied as latching projections and/or latching indentations (36, 37) are moulded onto the hard or dimensionally stable plastics material (4), said mating latching means (8) protruding relative to the comparatively soft or shape-elastic plastics material and being intended for cooperation with latching means (7) provided on at least one injection moulding tool part (5), while at least a pair or a pairing of latching and mating latching means (7, 8) cooperating with one another are associated with a first injecting position intended for injection-moulding the moulded body (31) and at least one pair or a pairing of latching and mating latching means cooperating with one another are associated with a second injecting position in which the moulded body (31) and the at least one injection moulding tool part (5) latched thereto are spaced apart to form a space that is intended for the injection moulding of the comparatively soft or shape-elastic plastics material (3).

10. Outflow element according to claim 9, **characterised in that** the mating latching means (8) spaced apart in the axial direction are provided on at least one latching strip (38).

11. Outflow element according to claim 9 or 10, **characterised in that** the multi-component injection moulding (1) is embodied as an outflow disc mounted on the outflow side of the housing of the outflow element.

12. Outflow element according to one of claims 9 to 11, **characterised in that** the moulded body (31) is almost entirely extrusion-coated with the component consisting of a comparatively soft or shape-elastic plastics material (3), and **in that** the moulded body (31) preferably remains uncoated only in the region of the mating latching means (8) associated with the second injecting position and/or around any outlier points.

## Revendications

1. Procédé de fabrication d'une pièce moulée par injection multi-composants (1) pour un élément sanitaire de sortie, dans lequel un constituant de la pièce moulée par injection multi-composants (1) en matière plastique relativement souple ou de forme élastique (3) est moulé par injection sur un corps moulé (31) fabriqué à partir d'une matière plastique dure ou de forme stable (4), **caractérisé en ce que** sur au moins une des parties de moule d'injection (5, 6) entourant la cavité de moule (32) destinée à la fabrication du corps moulé (31) sont prévus des moyens d'enclenchement (7) conçus comme des formations d'enclenchement en relief et/ou en creux (33, 34) pour la réalisation de moyens d'enclenchement complémentaires (8) sur le corps moulé (31), et qu'après la fabrication du corps moulé (31) au moins une autre paire ou un autre appariement de moyens d'enclenchement (7) et de moyens d'enclenchement complémentaires (8) sont mis en prise pour mettre le corps moulé (31) à distance d'au moins une partie de moule d'injection (5) de façon que, dans une étape de procédé suivante, la matière plastique relativement souple ou de forme élastique (3) soit moulée par injection dans l'espace libre formé entre le corps moulé (31) et ladite au moins une partie de moule d'injection (5).

2. Procédé selon la revendication 1, **caractérisé en ce que** le corps moulé (31) bloqué par enclenchement sur une partie de moule d'injection (5) est mis en place dans une cavité de moule (32') plus grande formée avec au moins une autre partie de moule d'injection (12) pour le moulage par injection de la matière plastique relativement souple ou de forme élastique (3).

3. Procédé selon la revendication 1 ou 2, **caractérisé en ce que** la matière plastique relativement souple ou de forme élastique (3) est moulée par injection sur le corps moulé (31) essentiellement sur toute sa surface.

4. Procédé selon une des revendications 1 à 3, **caractérisé en ce que** la pièce moulée par injection multi-composants (1) est conçue comme côté frontal de sortie d'un dispositif de non-retour, d'un régulateur de débit ou d'un régulateur de jet.

5. Moule d'injection pour fabriquer une pièce moulée par injection multi-composants (1) pour un élément sanitaire de sortie, en particulier destiné à être utilisé dans un procédé de fabrication selon les revendications 1 à 4, lequel moule d'injection présente plusieurs parties de moule d'injection (5, 6 ; 5, 12) qui délimitent au moins une cavité de moule (32 ; 32'), **caractérisé en ce que** des moyens d'enclenchement (7) conçus comme des formations d'enclenchement en relief et/ou en creux (33, 34) sont prévus sur au moins une partie de moule d'injection (5) pour la réalisation de moyens d'enclenchement complémentaires (8) sur un corps moulé (31) fabriqué à partir d'une matière plastique dure ou de forme stable (4), qu'au moins une paire de moyens d'enclenchement et d'enclenchement complémentaire (7, 8) est associée à une première position d'injection du corps moulé (31) sur ladite au moins une partie de moule d'injection, et que ladite au moins une partie de moule d'injection (5) peut être amenée par mise en prise d'au moins une autre paire ou d'un autre appariement de moyens d'enclenchement et d'enclenchement complémentaire (7, 8) dans au moins une deuxième position d'injection par rapport au corps moulé (31), dans laquelle le corps moulé (31) est maintenu à distance de ladite au moins une partie de moule d'injection (5) en formant un espace libre prévu pour la matière plastique relativement souple ou de forme élastique (3), pour le moulage par injection d'un constituant de la pièce moulée par injection multi-composants (1) dans une matière plastique relativement souple ou de forme élastique (3).

6. Moule d'injection selon la revendication 5, **caractérisé en ce que** ladite au moins une partie de moule d'injection (5) est conçue comme outil de manipulation pour la mise en place du corps moulé (31) bloqué par enclenchement sur ladite au moins une partie de moule d'injection (5) dans une cavité de moule (32') plus grande formée avec au moins une autre partie de moule d'injection (12).

7. Moule d'injection selon la revendication 5 ou 6, **caractérisé en ce que** plusieurs nervures de moyens d'enclenchement, de préférence espacées régulièrement les unes des autres en direction circonférentielle, avec des moyens d'enclenchement (7) espacés les uns des autres en direction axiale, sont prévues sur une paroi circonférentielle de ladite au moins une partie de moule d'injection (5) qui délimite la cavité de moule (32).

8. Moule d'injection selon une des revendications 5 à 7, **caractérisé en ce que** le moule d'injection est conçu comme un moule rotatif ou réversible.

9. Régulateur de jet, régulateur de débit, dispositif de non-retour ou élément sanitaire de sortie analogue qui présente au moins une pièce moulée par injection multi-composants (1) pouvant en particulier être fabriquée suivant le procédé de fabrication selon une des revendications 1 à 4, lequel possède un corps moulé (31) dans une matière plastique dure ou de forme stable (4), sur lequel un constituant dans une matière plastique relativement souple ou de forme élastique (3) est moulé par injection, **caractérisé en ce que** sur la matière plastique dure ou de forme stable (4) sont formés des moyens d'enclenchement complémentaires (8) conçus comme des formations d'enclenchement en relief et/ou en creux (36, 37) qui font saillie au-delà de la matière plastique relativement souple ou de forme élastique (3) et qui sont destinés à coopérer avec des moyens d'enclenchement (7) prévus sur au moins une partie de moule d'injection (5), au moins une paire ou un appariement de moyens d'enclenchement et d'enclenchement complémentaire (7, 8) étant associé(e) à une première position d'injection destinée à l'injection du corps moulé (31) et au moins une paire ou un appariement de moyens d'enclenchement et d'enclenchement complémentaire à une deuxième position d'injection dans laquelle le corps moulé (31) et ladite au moins une partie de moule d'injection (5) bloquée par enclenchement avec lui sont distants l'un de l'autre en formant un espace libre destiné au moulage par injection de la matière plastique relativement souple ou de forme élastiques (3).

10. Elément de sortie selon la revendication 9, **caractérisé en ce que** les moyens d'enclenchement complémentaires (8) espacés les uns des autres en direction axiale sont prévus sur au moins une nervure de moyens d'enclenchement (38).

11. Elément de sortie selon la revendication 9 ou 10, **caractérisé en ce que** la pièce moulée par injection multi-composants (1) est conçue comme un disque de sortie disposé côté sortie sur le boîtier de l'élément de sortie.

12. Elément de sortie selon une des revendications 9 à 11, **caractérisé en ce que** le corps moulé (31) est surmoulé presque complètement avec le constituant en matière plastique relativement souple ou de forme élastique (3), et que le corps moulé (31) reste de préférence non revêtu seulement dans la région des moyens d'enclenchement complémentaires (8) associés à la deuxième position d'injection et/ou dans la région de points d'éjection.
